## Europäisches Patentamt
## European Patent Office
## Office européen des brevets

(11) Numéro de publication: **0 289 372**
**A1**

## (12) DEMANDE DE BREVET EUROPEEN

(21) Numéro de dépôt: 88400705.5

(22) Date de dépôt: 23.03.88

(51) Int. Cl.⁴: **B 62 D 43/04**

(30) Priorité: 31.03.87 FR 8704586

(43) Date de publication de la demande:
02.11.88 Bulletin 88/44

(84) Etats contractants désignés: **DE GB IT**

(71) Demandeur: **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur: **Depoix, Jean-Claude**
**43, Quai Ferber**
**F-94360 Bry-sur-Marne (FR)**

(74) Mandataire: **Boivin, Claude**
**9, rue Edouard-Charton**
**F-78000 Versailles (FR)**

(54) **Support de roue de secours pour véhicule automobile.**

(57) Support de roue de secours de véhicule automobile comprenant un panier ou berceau (1) articulé à l'une de ses extrémités sur la caisse du véhicule de façon à pouvoir pivoter en dessous du plancher (8) autour d'un axe horizontal transversal entre une position relevée amenant la roue (2) à proximité de ce plancher et une position abaissée proche du sol, un moyen (9) permettant le verrouillage-déverrouillage de l'extrémité libre (3h) du panier en position relevée.

L'articulation du panier comporte au moins un palier constitué d'un tourillon (4a ou 4b) coopérant avec une boutonnière (3f ou 3g) d'axe longitudinal.

FIG.1

## Description

### Support de roue de secours pour véhicule automobile

La présente invention a pour objet un support de roue de secours pour véhicule automobile du type comprenant un panier ou berceau articulé à l'une de ses extrémités sur la caisse du véhicule de façon à pouvoir pivoter en dessous du plancher autour d'un axe horizontal transversal entre une position relevée amenant la roue à proximité de ce plancher et une position abaissée proche du sol, un moyen permettant le verrouillage-déverrouillage de l'extrémité libre du panier en position relevée.

Le brevet français 1 494 180 décrit un support de roue dans lequel le panier est muni de deux galets qui sont engagés dans deux rails de guidage fixés sous le plancher du véhicule; ce rail permettant un recul longitudinal du panier qui facilite la prise de la roue. Mais ces rails sont chers, lourds et recueillent toutes sortes de scories qui détériorent rapidement les qualités de roulement des galets et les galets eux-memes.

Le support de roue de secours selon l'invention ne présente pas ces inconvénients tout en permettant également un recul du panier.

Le support selon l'invention est caractérisé en ce que l'articulation du panier comporte au moins un palier constitué d'un tourillon coopérant avec une boutonnière d'axe longitudinal.

Dans un mode de réalisation de l'invention, l'articulation est constituée de deux galets de roulement coaxiaux qui sont portés par le plancher du véhicule et peuvent s'engager dans deux boutonnières prévues chacune à l'avant de l'un des bords longitudinaux du panier.

On a décrit ci-après, à titre d'exemple non limitatif, un mode de réalisation du support de roue de secours selon l'invention, avec référence au déssin annexé dans lequel :

La Figure 1 est une vue en élévation latérale du support;

La Figure 2 en est une vue en plan;

La Figure 3 en est une coupe suivant III-III de la Figure 2.

Tel qu'il est représenté au dessin, le support de roue de secours selon l'invention est constitué par un panier qui est désigné d'une façon générale par la référence 1 et peut porter une roue de secours 2.

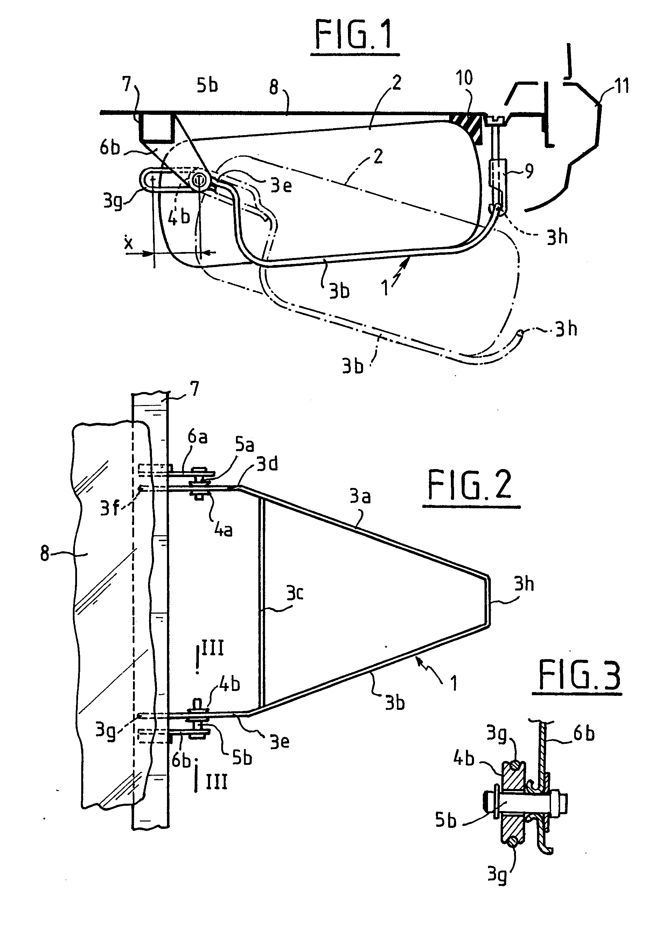

Le panier 1 est constitué par un fil métallique qui est plié de manière à former en plan un trapèze (Figure 2). Les deux côtés 3a et 3b de ce trapèze sont reliés par la grande base 3c et sont prolongés au-delà de cette grande base par deux bras 3d et 3e. Chacun de ces bras est plié une première fois à 90° par rapport au plan du trapèze de façon à s'élever au-dessus de ce plan, puis une seconde fois à 90° de façon à s'étendre parallèlement au-dessus du plan du trapèze tout en s'écartant de la grande base 3c; son extrémité est elle-même pliée pour former une boutonnière 3f ou 3g d'axe longitudinal.

Dans les boutonnières 3f et 3g peuvent s'engager deux galets à gorge 4a et 4b montés sur deux pivots coaxiaux 5a et 5b qui sont portés par deux équerres 6a et 6b fixées à une traverse 7 du plancher du véhicule.

Du fait de la présence des deux boutonnières 3f et 3g, le berceau peut être déplacé longitudinalement de la distance x. Lorsqu'il est dans sa position arrière, la partie avant 3h peut etre fixée par un dispositif d'accrochage de type connu, ce qui a pour effet de maintenir la roue 2 en appui sur une butée de caoutchouc 10 fixée sur le plancher 8.

Quand on désire prendre la roue de secours, on fait descendre le dispositif d'accrochage 9 de sorte que le berceau pivote autour de l'axe des galets 4a et 4b en libérant la roue de son contact avec la butée 10. Lorsque la roue est suffisamment écartée de cette butée, on dégage la partie avant 3h du panier du crochet du dispositif 9, on continue d'abaisser cette partie avant et on exerce une traction sur le panier de façon qu'il se déplace longitudinalement, les boutonnières 3f et 3g glissant sur les galets 4a et 4b, et dépasse l'arrière 11 du véhicule, ce qui facilite la prise de la roue de secours.

## Revendications

1. Support de roue de secours de véhicule automobile comprenant un panier ou berceau (1) articulé à l'une de ses extrémités sur la caisse du véhicule de façon à pouvoir pivoter en dessous du plancher (8) autour d'un axe horizontal transversal entre une position relevée amenant la roue (2) à proximité de ce plancher et une position abaissée proche du sol, un moyen (9) permettant le verrouillage-déverrouillage de l'extrémité libre (3h) du panier en position relevée, caractérisé en ce que l'articulation du panier comporte au moins un palier constitué d'un tourillon (4a ou 4b) coopérant avec une boutonnière (3f ou 3g) d'axe longitudinal.

2. Support de roue de secours selon la revendication 1, caractérisé en ce que l'articulation est constituée de deux galets de roulement coaxiaux (4a et 4b) qui sont portés par le plancher (8) du véhicule et peuvent s'engager dans deux boutonnières (3f et 3g) prévues chacune à l'avant de l'un des bords longitudinaux du panier.

3. Support de roue de secours sélon la revendication 2, caractérisé en ce que le panier (1) est constitué par un fil métallique permettant de réaliser les boutonnières (3f et 3g) par enroulement de ce fil, les galets (4a et 4b) présentant une gorge coopérant avec le fil.

0289372

## FIG.1

## FIG.2

## FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 428 513  (GENERAL MOTORS)<br>* Revendication 1 *<br>--- | 1 | B 62 D  43/04 |
| A | GB-A- 302 801  (FORTH ENGINE)<br>--- | | |
| A | US-A-3 369 683  (RICHARDS)<br>----- | | |

DOMAINES TECHNIQUES
RECHERCHES (Int. Cl.4)

B 62 D

Le présent rapport a été établi pour toutes les revendications

| Lieu de la recherche | Date d'achèvement de la recherche | Examinateur |
|---|---|---|
| LA HAYE | 17-06-1988 | SCHMITTER J.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
........................................................................
& : membre de la même famille, document correspondant

EPO FORM 1503 03.82 (P0402)